# FASCICULE DE BREVET EUROPEEN

(11) **EP 0 557 403 B1**
(45) Date de publication et mention de la délivrance du brevet: **04.10.1995**
(21) Numéro de dépôt: 91920885.0
(22) Date de dépôt: 13.11.1991
(51) Int. Cl.: G01N 35/04, G01N 21/03, B01L 9/06

(54) **SEGMENT REACTIONNEL POUR ANALYSEUR AUTOMATIQUE D'ECHANTILLONS**
PROBENTRÄGER FÜR EIN AUTOMATISCHES GERÄT ZUR ANALYSE VON PROBEN
REACTION SEGMENT FOR AN AUTOMATIC SAMPLE ANALYZER

(30) Priorité: 16.11.1990 FR 9014348
(43) Date de publication de la demande: 01.09.1993
(73) Titulaire: SOCIETE ALCYON ANALYZER S.A., F-34135 Mauguio Cédex (FR)
(72) Inventeur: COVAIN, Serge, F-34980 Saint-Gely-du-Fesc (FR)
(74) Mandataire: Ravina, Bernard
(86) Numéro de dépôt international: FR9100897
(87) Numéro de publication internationale: WO9208987

(56) Documents cités:
- EP-A- 0 109 922
- EP-A- 0 369 840
- WO-A-88/00706
- FR-A- 2 142 746
- US-A- 4 795 710
- US-A- 4 844 868

## Description

La présente invention a pour objet un segment réactionnel pour analyseur automatique d'échantillons par colorimétrie et un analyseur équipé d'un tel segment.

Les analyseurs connus sont équipés de cuves réactionnelles dans chacune desquelles est opéré le mélange dosé d'une quantité de sang avec une quantité de réactif en vue d'une analyse colorimétrique.
Après usage ces cuves sont jetées.

Certains analyseurs connus sont équipés d'un plateau fixe de réception des cuves et d'un moyen d'analyse mobile par rapport à ce plateau et ces cuves.

Le document EP-A-0 369 840 montre un segment réactionnel destiné à être monté de manière amovible sur un plateau fixe. Ce segment réactionnel avec cuves inamovibles est pourvu d'une poignée de préhension présentant un logement longitudinal pour coiffer deux ergots de positionnement du plateau fixe.
D'autres analyseurs connus sont équipés d'un moyen d'analyse colorimétrique fixe, les cuves étant montées sur un plateau mobile par rapport à ce moyen d'analyse.

De tels analyseurs sont notamment connus du US-A-4 844 868 et US-A-4 795 710.
Dans le US-A-4 844 868 sont prévus des supports sensiblement plans percés de part en part pour recevoir chacun plusieurs cuves, les supports avec leur cuve étant ensuite montés sur un plateau rotatif pour amener chaque cuve en relation avec un moyen d'analyse.
Le US-4 795 710 montre aussi un support pourvu d'une pluralité de logement pour recevoir des cuves. Ce support étant prévu pour être monté sur un mandrin d'entrainement. Les deux documents antérieurs montrent des supports prévus pour recevoir des cuves amovibles.

La présente invention concerne un segment réactionnel destiné à être monté sur un plateau mobile par rapport au moyen d'analyse qui peut par exemple être celui décrit dans la demande de brevet déposée ce même jour par la demanderesse : "un analyseur automatique d'échantillons par colorimétrie".

On sait l'avantage que procure l'utilisation de segment réactionnel par rapport à une couronne réactionnelle.

Un segment réactionnel permet notamment une plus grande souplesse d'utilisation .

En effet, après analyse du contenu des cuves qu'il comporte il pourra être facilement retiré du plateau tournant sans qu'il soit nécessaire interrompre le fonctionnement de l'analyseur alors que le remplacement d'une couronne réactionnelle nécessite l'arrêt de cet appareil, ce qui est générateur de perte de temps.

Alors que l'analyseur présente un degré d'automaticité élevé, les segments réactionnels sont encore introduits et retirés de leur plateau support manuellement.

La présente invention a pour objet un nouveau type de segment réactionnel, lequel peut être mis en place ou retiré de façon automatique par des moyens de chargement et de déchargement équipant l'analyseur.

A cet effet, le segment réactionnel pour analyseur automatique d'échantillons par colorimétrie destiné à être monté de manière amovible sur un plateau tournant que comporte l'analyseur de façon que les cuves réactionnelles de ce segment soient amenées tour à tour en relation avec un dispositif d'analyse colorimétrique se caractérise en ce que ses cuves réactionnelles 3 sont verticales régulièrement espacées suivant un arc de circonférence de cercle, solidaires d'une même barrette 4 horizontale en forme de secteur de couronne, la dite barrette se développant du côté concave du segment et sa zone médiane étant prolongée radialement du côté concave du segment par une platine 5 horizontale en extrémité de laquelle s'enracine un moyen 6 de positionnement et de guidage dans des dispositifs de chargement 7 et déchargement 8 équipant l'analyseur et dans au moins un orifice 9 pratiqué dans le plateau tournant 2,
- que le moyen 6 de positionnement et de guidage comprend deux rainures verticales 10 parallèles opposées présentant chacune une section droite triangulaire,
- que le moyen de guidage et de positionnement est constitué par une paroi verticale 11 de forme carrée ou rectangulaire à la grande face antérieure 11A de laquelle s'enracine deux parois verticales 12 s'étendant de manière oblique par rapport à la paroi rectangulaire, les deux parois obliques 12 et la paroi rectangulaire 11 délimitant les deux rainures verticales 10,
- que le moyen de positionnement de guidage est pourvu d'une paroi horizontale 13 raccordée à la face antérieure 11A de la paroi verticale 11 suivant une portion de la longueur du bord supérieur de la paroi 11, la dite paroi 13 se développant suivant un plan horizontal supérieur par rapport au plan horizontal suivant lequel se développe l'extrémité supérieure des cuves réactionnelles 3.

D'autres avantages et caractéristiques de l'invention apparaîtront à la lecture de la description d'une forme préférée de réalisation en se référant aux dessins annexés en lesquels :

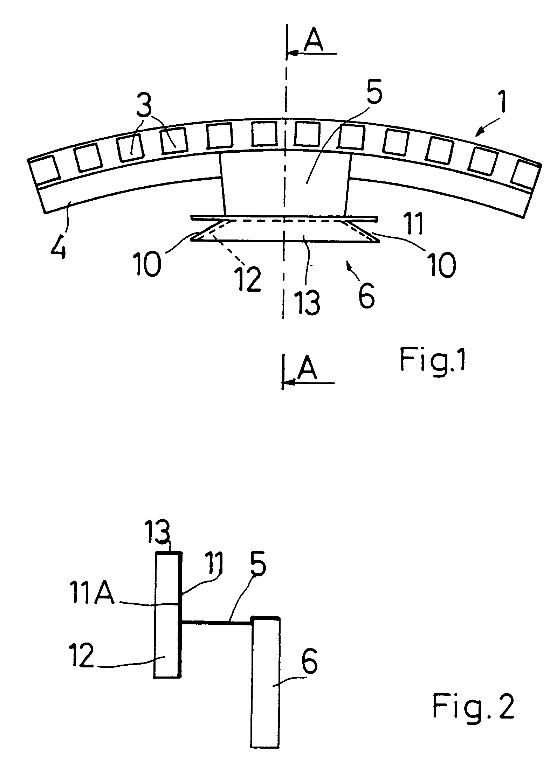

- la figure 1 est une vue de dessus d'un segment réactionnel conforme à l'invention.
- la figure 2 est une vue en coupe selon la ligne AA de la fig.1.

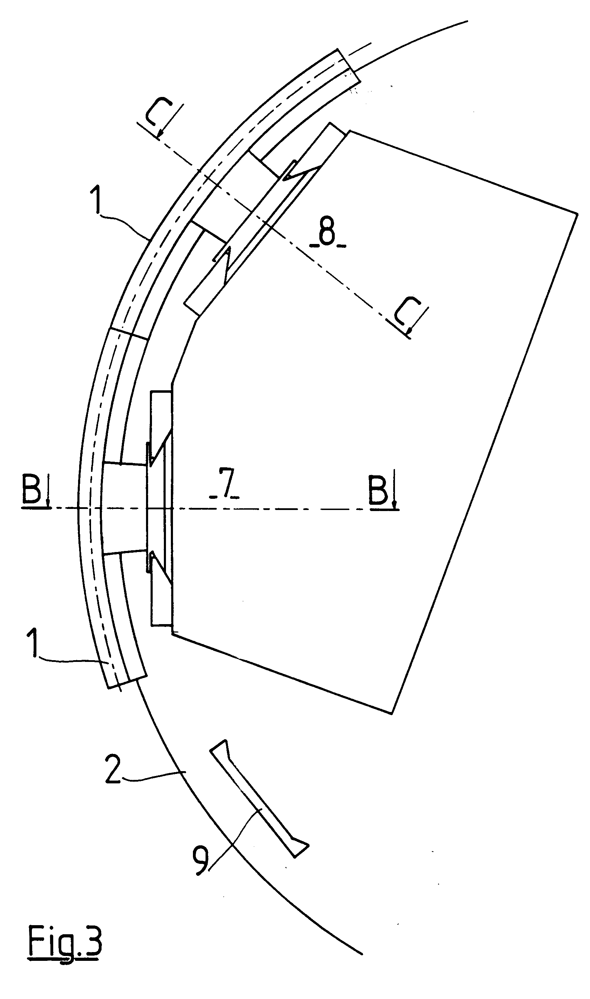

- la figure 3 est une vue partielle de dessus d'un analyseur destiné à recevoir le segment selon l'invention.

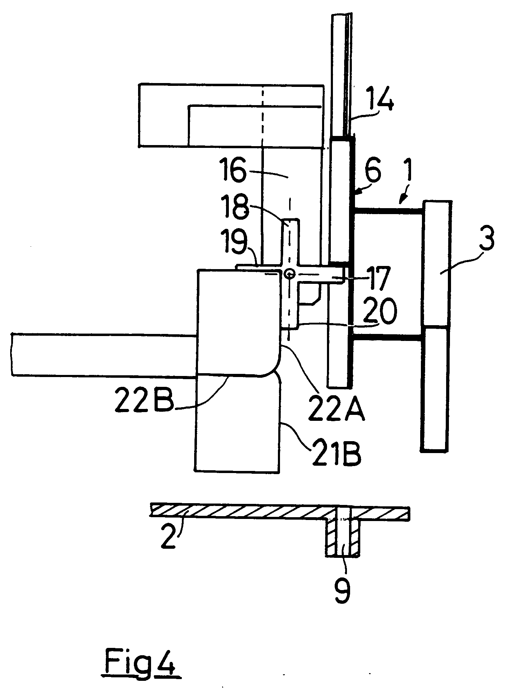

- la figure 4 est une vue en coupe selon la ligne BB de la fig.3.

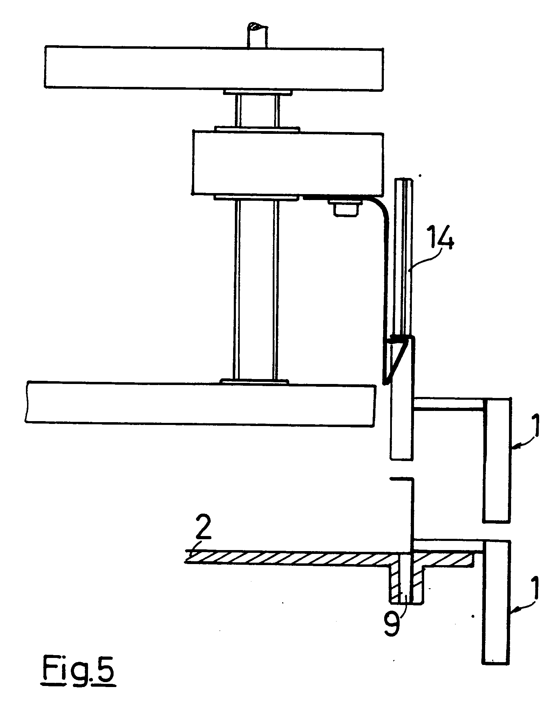

- la figure 5 est une vue en coupe selon la ligne CC de la fig.2.

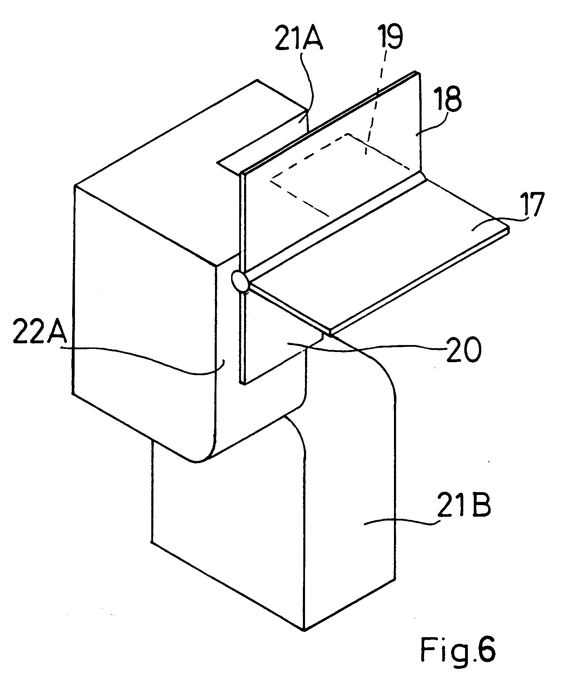

- la figure 6 est une vue en perspective de la came du moyen de chargement et des organes qui coopèrent avec elle.

Tel que représenté le segment réactionnel 1 selon l'invention pour analyseur automatique d'échantillon par colorimétrie destiné à être monté de manière amovible sur un plateau tournant 2 que comporte l'analyseur comprend une pluralité de cuves réactionnelles 3 verticales régulièrement espacées suivant un arc de circonférence de cercle et solidaires d'une même barrette horizontale 4 en forme de secteur de couronne, la dite barrette se développant du côté concave du segment et sa zone médiane étant prolongée radialement du côté concave du segment par une platine horizontale 5 en extrémité de laquelle s'enracine un moyen 6 de positionnement et de guidage 6 dans des dispositifs de chargement 7 et de déchargement 8 équipant l'analyseur et dans un orifice 9 pratiqué dans le plateau 2.

Il est à noter que, entre les cuvettes 3 du segment, sont ménagés des intervalles réguliers.

De préférence les cuves s'enracinent à la barrette 4 par leur extrémité supérieure.

Toujours selon la forme préférée de réalisation, chaque cuve présente une section droite carrée.

Toujours selon la forme préférée de réalisation, le moyen 6 de positionnement et de guidage comprend deux rainures verticales 10 parallèles opposées présentant chacune une section droite triangulaire, mais il est bien évident que ces rainures peuvent présenter une toute autre forme.

Le moyen 6 de guidage et de positionnement est constitué par une paroi verticale 11 de forme carrée ou rectangulaire à la grande face antérieure 11A de laquelle s'enracine deux parois verticales 12 s'étendant de manière oblique par rapport à la paroi rectangulaire, les deux parois obliques 12 et la paroi rectangulaire 11 délimitant les deux rainures verticales 10.

De préférence le moyen de positionnement 6 se développe de part et d'autre du plan géométrique contenant la platine horizontale 5.

Il faut noter que les parois obliques, outre le fait de délimiter les deux rainures 10 avec la paroi 11, constituent avec la dite paroi grâce à leur élasticité naturelle un moyen de positionnement précis et de blocage dans l'orifice 9 du plateau 2.

Toujours selon la forme préférée de réalisation, le moyen 6 du segment réactionnel est pourvu d'une paroi horizontale 13 raccordée à la face antérieure 11A de la paroi verticale 11 suivant une portion de la longueur du bord supérieur de la paroi 11, la dite paroi 13 se développant suivant un plan horizontal supérieur par rapport au plan horizontal suivant lequel se développe l'extrémité supérieure des cuves réactionnelles.

Préférentiellement le bord inférieur horizontal de la paroi verticale 11 du moyen de positionnement est disposé suivant un niveau supérieur par rapport aux extrémités inférieures des cuves réactionnelles 3.

Il est à noter que lorsque les différents segments réactionnels sont empilés les uns sur les autres, ils sont en contact les uns avec les autres par les cuves réactionnelles d'une part et par le moyen 6 d'autre part.

Un tel segment réactionnel avec d'autres segments de même caractéristiques sont destinés à être disposés en fixation sur le plateau circulaire 2 de l'analyseur.

Le plateau de forme circulaire est en prise par l'intermédiaire d'une transmission appropriée avec organe moteur commandé.

Ainsi le mouvement du plateau sera un mouvement commandé grâce auquel chacune des cuves réactionnelles des segments sera amenée en regard du moyen d'analyse.

Le plateau circulaire comporte à distance de son périmètre les orifices 9. Comme dit précédemment chaque orifice 9 est destiné à recevoir en léger blocage le moyen 6 d'un des segments réactionnels.

On conçoit donc que les segments réactionnels 1 lorsqu'ils sont mis en place sur le plateau 2 sont en appui par leur paroi horizontale 5 sur la face supérieure du plateau 2, les cuves réactionnelles 3 du dit segment étant périmétriques au dit plateau.

Avantageusement au dispositif de chargement 7 de l'analyseur, est associé un magasin de stockage des segments non encore utilisés tandis qu'au dispositif de déchargement 8 est associé un second magasin de stockage ou réception des segments 1 usagés.

Selon la forme préférée de réalisation, le premier et le second magasin comprennent deux guides verticaux 14 portés par un chassis au-dessus du trajet des orifices du plateau 2 et en écartement du dit plateau; chaque guide 14 présente une section droite de forme complémentaire de celle que présente les rainures 10 de guidage du moyen 6 de positionnement, les dites rainures de guidage venant coopérer en guidage avec les guides 14. Les guides présentent donc une section droite de forme triangulaire.

Le dispositif de chargement 7 est disposé en arrière de son magasin de façon à coopérer avec le moyen 6 du segment inférieur de la pile de segment et plus précisément avec la paroi horizontale 13 de ce segment.

Selon la forme préférée de réalisation, le dispositif de chargement comprend un organe moteur qui actionne de haut en bas et de bas en haut, suivant un axe vertical et en synchronisme avec la rotation du plateau, un équipage mobile comprenant une chape 16 dans laquelle sont montés en rotation suivant un axe horizontal commun un organe de retenue 17 et un organe poussoir 18 solidaires l'un de l'autre et de leviers 19 et 20 qui coopèrent au cours de la descente et de la montée de l'équipage mobile tour à tour avec une première surface 21 d'une came fixe et avec une seconde surface 22 de cette même came.

Selon la forme préférée de réalisation, l'organe de retenue 17, l'organe poussoir 18, et les deux leviers 19 et 20 sont fixés à un même moyeu monté en rotation dans la chape et s'étendent radialement par rapport à ce moyeu.

Il est à noter que l'élément formé par les organes 17 et 18 et par les leviers 19 et 20 ainsi que par le moyeu est disposé entre le magasin et la came.

L'organe de retenue et l'organe poussoir sont perpendiculaires l'un à l'autre et sont chacun constitués par une paroi de forme rectangulaire, la longueur de cette paroi étant égale de préférence à la longueur du moyeu.

Le premier levier 19 est constitué par une paroi de forme rectangle, cette paroi étant perpendiculaire à l'organe poussoir et diamétralement opposée à l'organe de retenue.
Il est important de noter que cette paroi 19 ne couvre que la moitié de la longueur du moyeu.

L'autre levier 20 est diamétralement opposé à l'organe poussoir et est constitué toujours par une paroi rectangulaire.

Cette paroi rectangulaire est perpendiculaire au levier 19 et est décalée latéralement sur le moyeu par rapport à ce dit levier 19 de façon à ne couvrir que l'autre moitié du dit moyeu.

La première surface 21 de la came est destinée à coopérer avec le levier 19 tandis que la seconde surface 22 coopère avec le levier 20.
La première surface 21 présente deux facettes 21A et 21B perpendiculaires l'une à l'autre, la première facette 21A que rencontre le levier 19 au cours du mouvement de descente étant horizontale tandis que la seconde 21B prolonge la première verticalement et vers le bas.

La deuxième surface 22 de came est destinée à coopérer avec le second levier 20 et présente toujours deux facettes 22A et 22B, dont la première 22A que rencontre le levier 20 au cours de la descente est verticale et est contenue dans le plan géométrique vertical contenant la deuxième facette 21B et dont la seconde 22B est horizontale et est contenue dans le plan géométrique horizontal contenant la facette 21A de la première surface de came.

On va expliquer maintenant le fonctionnement du dispositif de chargement.

En position initiale, l'équipage mobile est en début de sa course descendante et l'organe de retenue 17 est horizontal et se développe vers la pile de segments disposée dans le magasin.

Le dernier segment de la pile par sa paroi 13 vient en appui contre l'organe de retenue 17, et la pile de segment se trouve immobilisée en translation dans le magasin.

Suivant cette position initiale, l'organe poussoir 18 est vertical et se développe vers le haut.

Toujours suivant cette position initiale, le bras 19 est disposé au-dessus de la surface 21A en écartement de cette dernière tandis que le levier 20 est en appui contre la surface 22A de façon à s'opposer au basculement de cet ensemble autour de l'axe du moyeu sous l'effet de l'action exercée par le poids de la pile de segment sur l'organe de retenue.

Toujours suivant la position initiale, l'axe du moyeu sera disposé suivant un niveau supérieur par rapport à la partie supérieure de la surface 22A.

Après positionnement d'un des orifices 9 au droit du magasin du dispositif de chargement, l'organe moteur de ce dernier sera mis en fonctionnement et l'équipage mobile entamera sa course descendante.
Le mouvement de l'organe de retenue en direction du bas entraînera le mouvement de la pile de segment dans le magasin en direction de l'orifice 9 du plateau.

Tant que le levier 20 demeure en contact avec la surface 22A, l'organe de retenue 17 est animé au cours de la descente d'un mouvement de translation.
Au cours de ce mouvement, le segment inférieur de la pile s'extrait de son magasin et est conduit vers l'orifice 9 du plateau par deux bras de guidage solidaires de la chape, ces dits bras de guidage coopérant avec les rainures 10 du moyen 6.

Lorsque le levier 19 rencontre la surface 21A, le levier 20 a été totalement dégagé de la surface 22A.
De la combinaison entre le mouvement de descente de l'équipage mobile et de l'appui du levier 19 sur la facette 22A, il va en résulter un mouvement de pivotement autour de l'axe du moyeu, de l'ensemble formé par les organes 17, 18, les leviers 19, 20 et le dit moyeu et ce, conjointement au mouvement de descente de cet ensemble.
Le mouvement de pivotement de l'ensemble sus-défini s'effectue dans un sens correspondant au rapprochement angulaire de l'organe 18 vers la pile de segment réactionnel.

Toujours au cours de ce mouvement, l'organe de retenue s'écarte progressivement de la pile et du segment qu'il soutient.
Il est à noter que au cours de ce mouvement de pivotement, le mouvement d'extraction du segment inférieur se poursuit toujours en direction de l'orifice 9 et à la fin ou très peu avant la fin de ce mouvement de pivotement et descente, le segment a été totalement extrait du magasin et son moyeu 6 par l'intermédiaire des bras de guidage a été amené au niveau de l'orifice 9 du plateau. A ce stade, l'organe 17 est dégagé de la paroi 13 tandis que l'organe poussoir 18 en se rapprochant d'une position horizontale vient en appui sur la face supérieure de la paroi 13, ce qui a pour effet d'enfoncer le moyen 6 dans l'orifice 9.

Lorsque en fin de pivotement, l'organe poussoir occupe une position horizontale, le levier 19 est en appui contre la facette 21B de la surface 21 de came et s'oppose au mouvement de basculement arrière du dit organe poussoir. Le mouuvement de descente se poursuivra tant que la platine 5 du segment ne sera pas en appui contre la face supérieure du plateau, et au cours de ce mouvement de descente, le mouvement duu poussoir sera un mouvement de translation.

Il pourra être prévu un capteur de fin de course actionné en fin de course descendante par l'équipage mobile pour inverser le sens d'alimentation de l'organe moteur en énergie et amorcer le mouvement de remontée.

En fin de course descendante, le levier 20 se retrouve disposé à l'horizontale sous et en écartement de la facette 22B et au cours du mouvement de remontée viendra buter contre la dite facette, ce qui provoquera le pivotement vers l'arrière autour de l'axe du moyeu de l'ensemble formé par le dit moyen, les organes 17 et 18 et les leviers 19 et 20.

Au cours de ce mouvement de pivotement arrière et de remontée, l'organe de retenue en se rapprochant d'une position proche de l'horizontale viendra en contact avec la face inférieure de la paroi 13 du dernier segment de la pile et par l'intermédiaire de cet élément soulèvera toute la pile.

Il faut noter que le dernier élément de la pile, avant d'être soulevé par l'organe 17, est en partie extrait du magasin et vient porter sur le segment qui vient d'être posé sur le plateau.
Le mouvement ascendant de l'organe 17 aura pour effet également de ramener le dernier élément de la pile dans le magasin.
Au cours de ce mouvement ascendant, les bras de guidage seront ramenés le long des guides 14 du magasin latéralement à ceux-ci.

La mise en place d'un segment sur le plateau par introduction du moyen 6 du segment dans l'orifice 9 du plateau ne peut s'effectuer que lorsque la paroi 13 est placée sur le trajet descendant de l'organe poussoir 18.
Dans le cas où cette paroi viendrait être placée au-dessus de ce trajet, l'organe 18 serait inopérant, le mouvement de descente de l'équipage mobile pourrait se poursuivre sans que cela produise d'effet.
Une telle situation selon laquelle la paroi 13 est au-dessus de la trajectoire descendante de l'organe 18 se produira lorsque le segment sera, soit coincé dans le magasin ou lorsqu'il viendra porter sur le segment déjà mis en place et disposé inopinément dans l'axe du magasin.
On perçoit immédiatement tout l'intérêt d'une telle solution.

La paroi 13 de chaque segment mis en place sur le plateau tournant est écartée de la face supérieure de ce plateau et peut coopérer avec le moyen de déchargement 8.
Ce moyen de déchargement sera constitué par un organe moteur actionnant suivant un axe vertical et suivant un mouvement de descente puis de montée, un dispositif d'accrochage de cette paroi 13 constitué par un crochet monté en extrémité d'une pâte verticale élastiquement flexible.
Préférentiellement, le dispositif d'accrochage par l'intermédiaire de l'extrémité supérieure sera fixé à une platine qui portera deux bras de guidage qui viendront s'engager dans les rainures 10 du segment afin de le guider vers les guides 14 du magasin du dispositif de déchargement.

Dans un souci de simplification, un seul organe moteur pourra commander les mouvements de l'équipage mobile du moyen de chargement et du moyen d'accrochage du moyen de déchargement.

## Revendications

1. Segment réactionnel (1) pour analyseur automatique d'échantillons par colorimétrie destiné à être monté de manière amovible sur un plateau tournant (2) que comporte l'analyseur de façon que les cuves (3) réactionnelles de ce segment soient amenées tour à tour en relation avec un dispositif d'analyse colorimétrique caractérisé en ce que ses cuves réactionnelles (3) sont verticales régulièrement espacées suivant un arc de circonférence de cercle, solidaires d'une même barrette (4) horizontale en forme de secteur de couronne, la dite barrette se développant du côté concave du segment et sa zone médiane étant prolongée radialement du côté concave du segment par une platine (5) horizontale en extrémité de laquelle s'enracine un moyen (6) de positionnement et de guidage dans des dispositifs de chargement (7) et déchargement (8) équipant l'analyseur et dans au moins un orifice (9) pratiqué dans le plateau tournant (2),
- que le moyen (6) de positionnement et de guidage comprend deux rainures verticales (10) parallèles opposées présentant chacune une section droite triangulaire,
- que le moyen de guidage et de positionnement est constitué par une paroi verticale (11) de forme carrée ou rectangulaire à la grande face antérieure (11A) de laquelle s'enracine deux parois verticales (12) s'étendant de manière oblique par rapport à la paroi rectangulaire, les deux parois obliques (12) et la paroi rectangulaire (11) délimitant les deux rainures verticales (10),
- que le moyen de positionnement de guidage est pourvu d'une paroi horizontale (13) raccordée à la face antérieure (11A) de la paroi verticale (11) suivant une portion de la longueur du bord supérieur de la paroi (11), la dite paroi (13) se développant suivant un plan horizontal supérieur par rapport au plan horizontal suivant lequel se développe l'extrémité supérieure des cuves réactionnelles (3).

2. Segment réactionnel selon la revendication 1 caractérisé en ce que le moyen de positionnement (6) se développe de part et d'autre du plan géométrique contenant la platine horizontale (5).

3. Segment réactionnel selon la revendication 1 caractérisé en ce que le bord inférieur horizontal de la paroi verticale (11) du moyen de positionnement est disposée suivant un niveau supérieur par rapport aux extrémités inférieures des cuves réactionnelles (3).

4. Segment réactionnel selon la revendication 1 caractérisé en ce que les cuves (3) présentent chacune une section droite carrée.

5. Analyseur caractérisé en ce qu'il reçoit des segments réactionnels selon les revendications 1 à 4 et qu'il est doté d'un plateau tournant (2) à mouvement commandé de forme circulaire pourvu à distance de son périmètre de plusieurs orifices (9) destinés chacun à recevoir le moyen (6) de positionnement d'un segment et que le dit analyseur est équipé d'un magasin de stockage de segment non encore utili sé associé à un dispositif (7) automatique de chargement du plateau tournant et un second magasin de stockage de segment usagé associé à un dispositif (8) de déchargement du plateau.

6. Analyseur selon la revendication 5 caractérisé en ce que les segments réactionnels (1), lorsqu'ils sont mis en place sur le plateau (2), sont en appui par leur paroi horizontale (5) sur la face supérieure du plateau (2), les cuves réactionnelles (3) du dit segment étant périmétriques au dit plateau.

7. Analyseur selon la revendication 5 caractérisé en ce que les premier et second magasins comprennent deux guides verticaux (14) portés par un châssis au-dessus du trajet des orifices du plateau (2) et en écartement du dit plateau, chaque guide (14) présentant une section droite de forme complémentaire de celle que présente les rainures (10) de guidage du moyen (6) de positionnement, les dites rainures de guidage venant coopérer en guidage avec les guides (14).

8. Analyseur selon la revendication 5 caractérisé en ce que le dispositif de chargement est disposé en arrière du magasin et coopère avec les segments empilés dans ce magasin, le dit dispositif de chargement comprenant un organe moteur qui actionne de haut en bas et de bas en haut, suivant un axe vertical, un équipage mobile comprenant une chape (16) dans laquelle sont montés à rotation suivant un axe horizontal commun un organe de retenue (17) et un organe poussoir (18) solidaires l'un de l'autre et de leviers (19) et (20) qui coopèrent (les leviers) au cours de la descente et de la montée tour à tour avec une première surface (21) d'une came fixe et une seconde surface (22) de cette même came, et que l'organe de retenue à partir d'une position initiale suivant laquelle il se développe horizontalement vers la pile de segments (1) et retient le dernier segment de la pile en venant sous la paroi horizontale, est amené (l'organe de retenue) par combinaison d'un mouvement rectiligne descendant et d'un mouvement de rotation dirigé vers le bas, à se dégager du dit segment tandis que au cours de ce même mouvement, l'organe poussoir vient progressivement en appui sur la paroi horizontale du segment de la pile.

## Patentansprüche

1. Probenträgersegment (1) für einen automatischen kolorimetrischen Probenanalysator, das zur abnehmbaren Montage an einer Drehplatte (2) des Analysators bestimmt ist, derart, daß die Reaktionsküvetten (3) des Segments der Reihe nach zu einer kolorimetrischen Analyse-Vorrichtung in Beziehung gebracht werden, **dadurch gekennzeichnet,** daß seine senkrechten Reaktionsküvetten (3) in gleichmäßigen Abständen gemäß einem Kreisbogen angeordnet und fest mit einem horizontalen Balken (4) in Form eines Kranzsektors verbunden sind, wobei der Balken sich auf der konkaven Seite des Segments erstreckt und sein Mittelbereich von der konkaven Seite des Segments radial durch eine horizontale Platine (5) verlängert ist, an deren Ende sich eine Vorrichtung (6) zur Positionierung und Führung in eine Beschickungs-Vorrichtung (7) und eine Abnahme-Vorrichtung (8) des Analysators und in mindestens eine in der Drehplatte (2) ausgebildete Öffnung (9) anschließt,
- wobei die Vorrichtung (6) zur Positionierung und Führung zwei vertikale parallele gegenüberliegende Nuten (10) mit je dreieckigem Querschnitt aufweist,
- die Vorrichtung (6) zur Positionierung und Führung aus einer vertikalen quadratischen oder rechteckigen Wand (11) besteht, an deren großer Vorderseite (11A) zwei zur rechteckigen Wand schräg verlaufende senkrechte Wände (12) anschließen, die mit der rechteckigen Wand (11) die zwei vertikalen Nuten (10) begrenzen,
- die Vorrichtung zur Positionierung und Führung mit einer horizontalen Wand (13) versehen ist, die sich an die Vorderseite (11A) der vertikalen Wand (11) über einen Teil der Länge der Oberkante der Wand (11) anschließt und sich in einer horizontalen Ebene oberhalb der horizontalen Ebene, in der das obere Ende der Reaktionsküvetten (3) liegt, erstreckt.

2. Probenträgersegment nach Anspruch 1, **dadurch gekennzeichnet,** daß die Positionier-Vorrichtung (6) sich beiderseits der die horizontale Platine (5) enthaltenden geometrischen Ebene erstreckt.

3. Probenträgersegment nach Anspruch 1 , **dadurch gekennzeichnet,** daß die horizontale Unterkante der vertikalen Wand (11) der Positioniervorrichtung auf einem höheren Niveau bezüglich der Unterkanten der Reaktionsküvetten (3) angeordnet ist.

4. Probenträgersegment nach Anspruch 1, **dadurch gekennzeichnet,** daß die Küvetten (3) jede einen quadratischen Querschnitt haben.

5. Analysator, **dadurch gekennzeichnet,** daß er zur Aufnahme von Probenträgersegmenten nach den Ansprüchen 1 bis 4 eingerichtet und mit einer gesteuert angetriebenen kreisförmigen Drehplatte (2) ausgerüstet ist, die in einem Abstand von ihrem Umfang mehrere Öffnungen (9) aufweist, die jede zur Aufnahme der Vorrichtung (6) zum Positionieren eines Segments bestimmt sind, und daß der Analysator mit einem Magazin zur Lagerung von noch nicht gebrauchten Probenträgersegmenten, das mit einer automatischen Vorrichtung (7) zur Beschikkung der Drehplatte zusammenwirkt, und mit einem zweiten Magazin zur Lagerung von gebrauchten Probenträgersegmenten, das mit einer Vorrichtung (8) zur Entladung der Drehplatte zusammenwirkt, ausgerüstet ist.

6. Analysator nach Anspruch 5, **dadurch gekennzeichnet,** daß die Probenträgersegmente (1), wenn sie auf die Drehplatte (2) gebracht sind, mit ihrer horizontalen Wand (5) auf der Oberseite der Drehplatte (2) aufliegen, während die Reaktionsküvetten (3) des Segments sich am Umfang der Drehplatte befinden.

7. Analysator nach Anspruch 5, **dadurch gekennzeichnet,** daß das erste Magazin und das zweite Magazin zwei vertikale Führungen (14) aufweisen, die von einem Chassis oberhalb des Weges der Öffnungen der Drehplatte (2) und in einem Abstand von der Drehplatte gehalten sind, wobei jede Führung (14) einen Querschnitt aufweist, dessen Form komplementär zum Querschnitt der Führungsnuten (10) der Vorrichtung (6) zur Positionierung ist, die mit den Führungen (14) beim Führen zusammenwirken.

8. Analysator nach Anspruch 5, **dadurch gekennzeichnet,** daß die Beschickungs-Vorrichtung hinter dem Magazin angeordnet ist und mit den in diesem Magazin gestapelten Probenträgersegmenten zusammenwirkt, und daß die Beschickungs-Vorrichtung ein Antriebselement , das sich von oben nach unten und von unten nach oben gemäß einer vertikalen Achse bewegt, und einen beweglichen Wagen mit einem Bügel (16) aufweist, in dem an einer gemeinsamen horizontalen Achse ein Rückhalte-Element (17) und ein Vorschub-Element (18) drehbar gehalten sind, die miteinander und mit Hebeln (19) und (20) fest verbunden sind, wobei die Hebel bei der Abwärts- und Aufwärts-Bewegung Zug um Zug mit einer ersten Fläche (21) einer festen Kurvenscheibe und mit einer zweiten Fläche (22) der gleichen Kurvenscheibe zusammenwirken und das Rückhalte-Element aus einer Anfangsstellung, in der es sich horzontal in Richtung auf den Stapel von Probenträger-Segmenten (1) erstreckt und das letzte Segment des Stapels zurückhält, indem es unter die horizontale Wand gelangt, durch eine kombinierte gerade absteigende Bewegung und eine nach unten gerichtete Drehbewegung vom genannten Probenträgersegment freikommt, während im Verlauf dieser gleichen Bewegung das Vorschub-Element in zunehmenden Andruck auf die horizontale Wand des Probenträgersegments des Stapels kommt.

## Claims

1. A reaction segment (1) for an automatic sample analyser using colorimetry intended to be mounted so as to be removable on a turntable (2) comprised by the analyser in such a way that the reaction vessels (3) of this segment are brought in turn into a relationship with a colorimetric analysis device, characterised in that its reaction vessels (3) are vertical and at regular intervals along an arc of circumference of a circle, integral with one and the same horizontal bar (4) in the form of a sector of a crown, said bar extending on the concave side of the segment and its median zone being prolonged radially on the concave side of the segment by a horizontal plate (5) at the end of which is fixed a means (6) for positioning and guiding into the loading (7) and unloading (8) devices with which the analyser is equipped and into at least one orifice (9) made in the turntable (2),
- that the positioning and guiding means (6) comprises two parallel vertical grooves (10) opposite one another, each having a triangular cross section,
- that the guiding and positioning means is constituted by a vertical wall (11) square or rectangular in shape, on the large front face (11A) of which the two vertical walls (12) extending obliquely relative to the rectangular wall are fixed, the two oblique walls (12) and the rectangular wall (11) delimiting the two vertical grooves (10),
- that the positioning guiding means is provided with a horizontal wall (13) connected to the front face (11A) of the vertical wall (11) along a portion of the length of the upper edge of the wall (11), said wall (13) extending along a horizontal plane higher than the horizontal plane along which the upper end of the reaction vessels (3) extends.

2. A reaction segment according to Claim 1 characterised in that the positioning means (6) extends on either side of the geometric plane containing the horizontal plate (5).

3. A reaction segment according to Claim 1 characterised in that the horizontal lower edge of the vertical wall (11) of the positioning means is arranged a a level higher than the lower ends of the reaction vessels (3).

4. A reaction segment according to Claim 1 characterised in that the vessels (3) each have a square cross section.

5. An analyser characterised in that it receives reaction segments according to Claims 1 to 4 and that it is provided with a turntable (2) with controlled circular movement, provided at a distance from its perimeter with several orifices (9) each intended to receive the positioning means (6) of a segment and that said analyser is equipped with a magazine for storing segments not yet used associated with an automatic device (7) for loading the turntable and a second magazine for storing used segments associated with a device (8) for unloading the turntable.

6. An analyser according to Claim 5 characterised in that when the reaction segments (1) are positioned on the turntable (2), they rest by their horizontal wall (5) on the upper face of the turntable (2), the reaction vessels (3) of said segment being at the perimeter of said turntable.

7. An analyser according to Claim 5 characterised in that the first and second magazines comprise two vertical guides (14) carried by a frame above the path of the orifices of the turntable (2) and at a distance from said turntable, each guide (14) having a cross section complementary in shape to that of the grooves (10) for guiding the positioning means (6), said guide grooves cooperating in guiding with the guides (14).

8. An analyser according to Claim 5 characterised in that the loading device is arranged at the rear of the magazine and cooperates with the segments stacked in this magazine, said loading device comprising a motor element
which, from top to bottom and from bottom to top, along a vertical axis, actuates a piece of mobile equipment comprising a cover (16) inside which are mounted in rotation along a common horizontal axis a holding element (17) and a thrusting element (18) integral with each other and with levers (19) and (20), which levers cooperate during the descent and rise in turn with a first surface (21) of a fixed cam and a second surface (22) of the same cam, and that the holding element, starting from an initial position in which it extends horizontally towards the stack of segments (1) and holds the last segment in the stack coming under the horizontal wall, is caused (the holding element), by the combination of a descending rectilinear movement and a downwards rotational movement, to be released from said segment while, during this same movement, the thrusting element comes to rest progressively on the horizontal wall of the segment of the stack.
